# EUROPEAN PATENT SPECIFICATION

(11) **EP 2 925 049 B1**
(45) Date of publication and mention of the grant of the patent: **11.05.2016**
(21) Application number: 15164705.4
(22) Date of filing: 09.08.2010
(51) Int. Cl.: H04W 28/10

(54) **BANDWIDTH MANAGEMENT METHOD, EVOLVED NODE B, SERVING GATEWAY, AND COMMUNICATION SYSTEM**
BANDBREITENVERWALTUNGSVERFAHREN, WEITERENTWICKELTER NODE-B, GATEWAY UND KOMMUNIKATIONSSYSTEM
PROCÉDÉ DE GESTION DE BANDE PASSANTE, NOEUD B ÉVOLUÉ, PASSERELLE DE DESSERTE ET SYSTÈME DE COMMUNICATION

(30) Priority: 07.08.2009 CN 200910161059
(43) Date of publication of application: 30.09.2015
(62) Divisional of application: 10806059.1
(73) Proprietor: Huawei Technologies Co., Ltd., Longgang District Shenzhen, Guangdong 518129 (CN)
(72) Inventor: Jiang, Ming, 518129 Guangdong (CN); Lv, Wenan, 518129 Guangdong (CN)
(74) Representative: Isarpatent

(56) References cited:
- US-A1- 2004 052 212
- US-B1- 6 865 185
- "S1-U TNL congestion indication", 3GPP DRAFT; R3-082224, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080825, 25 August 2008 (2008-08-25), XP050165265,

## Description

### FIELD OF THE INVENTION

The present invention relates to the field of communications technologies, and in particular, to a bandwidth management method, an evolved Node B (eNodeB), a Serving Gateway (S-GW), and a communication system.

### BACKGROUND OF THE INVENTION

With the widespread application of wireless data services, a user has more and more requirements for bandwidth. As for a wireless network structure, in addition to an air interface, backhaul is also a bottleneck of the bandwidth. In a Long Term Evolution (LTE, Long Term Evolution)/System Architecture Evolution (SAE, System Architecture Evolution) network, transmission among an eNodeB, a Mobility Management Entity (MME, Mobility Management Entity), and a Serving Gateway (S-GW: Serving Gateway ) may be intuitively called backhaul; multiple parts (access network, convergence network, and backbone network) of a transmission network are involved, and the bandwidth provided by each part is different. Furthermore, a transmission device does not care transmitted content, and may forward a packet according to priorities at most, but cannot provide QoS (Quality of Service) traffic shaping based on the service. Therefore, the QoS of the S-GW is required to focus on End-to-End available bandwidth between the S-GW and the eNodeB, and the core of the QoS is the bandwidth.

As for operators, backhaul QoS is required to ensure the QoS of various services, and a high utilization rate of the backhaul bandwidth. Traffic of signaling and packet on a control plane is relatively small, so the QoS mainly focuses on the packet on a user plane, and the S-GW is responsible for forwarding the packet on the user plane. In the solution of the backhaul QoS, the eNodeB is responsible for the QoS traffic shaping of uplink packets, and the S-GW is responsible for the QoS traffic shaping of downlink packets.

Pool (POOL) is a common network disaster recovery solution of the wireless network, and in order to enable the LTE/SAE network to possess a disaster recovery capability, a solution of Serving Gateway Pool (S-GW POOL) may be applied in the LTE/SAE network. As for the eNodeB, one eNodeB faces a plurality of MMEs at the same time, the eNodeB distributes a service to an MME based on a certain strategy, and the MME selects a certain S-GW to serve the service according to a certain strategy. The final result is that a plurality of S-GWs respectively serves all users on one eNodeB, and a networking pattern of the S-GW POOL is thereby formed.

In the existing S-GW POOL, one eNodeB faces a plurality of S-GWs at the same time; in the meantime, in a scenario with limited backhaul bandwidth, the total available downlink bandwidth of the eNodeB and the plurality of S-GWs in the S-GW POOL is fixed. The backhaul QoS requires performing the QoS traffic shaping on the packet based on the total available downlink bandwidth of the eNodeB and the S-GWs.

In the prior art, actual downlink service packet traffic of the S-GW cannot be adapted, so that a part of downlink loads from the S-GW to the eNodeB are light loads, and a part of downlink loads from the S-GW to the eNodeB are heavy loads, so the utilization rate of the downlink backhaul bandwidth is low.

US 2004/052212 A1 relates to packet flow control in a wireless communications network, particularly, it discloses that the adjustment between the wireless network controller and the packet gateway is based on the communicated indication which is an indication of congestion of network resource.

The document "SI-U TNL congestion indication", 3GPP DRAFT; R3-082224, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080825, 25 August 2008 relates to SI-U TNL congestion indication. In particular it is disclosed that there is a the need for S1-U TNL congestion indication, S1-U TNL congestion detection and the procedure of congestion indication.

### SUMMARY OF THE INVENTION

Embodiments of the present invention provide a bandwidth management method, an eNodeB, an S-GW, and a communication system, so as to solve a problem in the prior art that when a plurality of first network devices shares a transmission channel to perform data transmission with a second network device, the transmission channel cannot adjust bandwidth in real time, so that a utilization rate of the bandwidth is low.

A bandwidth management method provided in an embodiment of the present invention is applicable to at least two first network devices and a second network device, in which the at least two first network devices share a transmission channel to perform data transmission with the second network device. The method includes:
sending, by the first network devices, traffic information in real time to the second network device; and
receiving, by the first network devices, adjusted transmission bandwidth information sent by the second network device, and performing the data transmission based on the adjusted transmission bandwidth, in which the adjusted transmission bandwidth is obtained by adjusting transmission bandwidth of the at least two first network devices by the second network device according to the traffic information and a preset adjustment rule; wherein the adjusting the transmission bandwidth of the at least two first network devices according to the traffic information and the preset adjustment rule comprises: reducing the transmission bandwidth from a first network device being light-loaded of the at least two first network devices according to the traffic information; and allocating the reduced transmission bandwidth to a first network device being congested of the at least two first network devices according to the traffic information.

An S-GW provided in an embodiment of the present invention is connected to a second network device, in which the second network device is further connected to at least another S-GW, and the S-GW and the at least another S-GW share a transmission channel to perform data transmission with the second network device. The S-GW includes:
a sending unit, configured to send traffic information in real time to the second network device; and
a receiving unit, configured to receive adjusted transmission bandwidth information sent by the second network device, and perform the data transmission based on the adjusted transmission bandwidth, in which the adjusted transmission bandwidth is obtained by adjusting transmission bandwidth of at least two S-GWsby the second network device according to the traffic information and a preset adjustment rule; wherein the adjusting the transmission bandwidth of the at least two first network devices according to the traffic information and the preset adjustment rule comprises: reducing the transmission bandwidth from a first network device being light-loaded of the at least two first network devices according to the traffic information; and allocating the reduced transmission bandwidth to a first network device being congested of the at least two first network devices according to the traffic information.

The eNodeB is configured to receive traffic information sent in real time by the S-GWs, adjust transmission bandwidth of the at least two S-GWs according to the received traffic information and a preset adjustment rule, and send the adjusted transmission bandwidth information to the S-GWs.

The S-GWs are configured to receive the adjusted transmission bandwidth information, and perform the data transmission based on the adjusted transmission bandwidth.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a flow chart of Embodiment 1 of a bandwidth management method according to an embodiment of the present invention;
FIG. 2 is a flow chart of Embodiment 2 of a bandwidth management method according to an embodiment of the present invention;
FIG. 3 is a flow chart of Embodiment 3 of a bandwidth management method according to an embodiment of the present invention;
FIG. 4 is a flow chart of Embodiment 4 of a bandwidth management method according to an embodiment of the present invention;
FIG. 5 is a flow chart of Embodiment 5 of a bandwidth management method according to an embodiment of the present invention;
FIG. 6 is a signaling flow chart of Embodiment 6 of a bandwidth management method according to an embodiment of the present invention;
FIG. 7 is a signaling flow chart of Embodiment 7 of a bandwidth management method according to an embodiment of the present invention;
FIG. 8 is a structure diagram of Embodiment 1 of an eNodeB according to an embodiment of the present invention;
FIG. 9 is a structure diagram of Embodiment 2 of an eNodeB according to an embodiment of the present invention;
FIG. 10 is a structure diagram of Embodiment 3 of an eNodeB according to an embodiment of the present invention;
FIG. 11 is a structure diagram of an embodiment of an S-GW according to an embodiment of the present invention; and
FIG. 12 is a structure diagram of an embodiment of a communication system according to an embodiment of the present invention.

### DETAILED DESCRIPTION OF THE EMBODIMENTS

The technical solutions of the present invention will be clearly and completely described in the following with reference to the accompanying drawings. It is obvious that the embodiments to be described are only a part rather than all of the embodiments of the present invention. All other embodiments obtained by persons of ordinary skill in the art based on the embodiments of the present invention without creative efforts shall fall within the protection scope of the present invention.

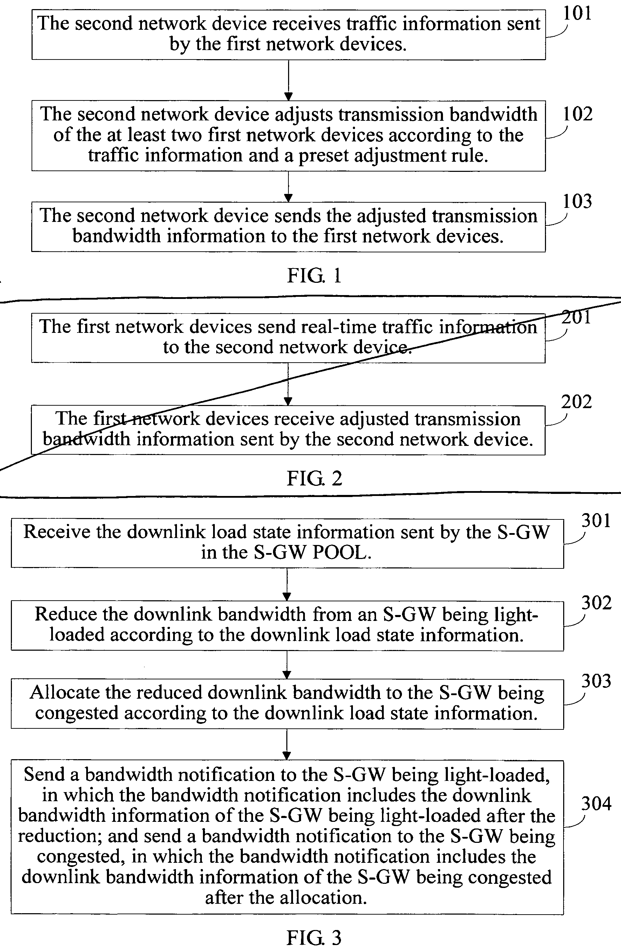

A downlink bandwidth management method provided by an embodiment of the present invention is introduced first. FIG. 1 describes a process of Embodiment 1 of the downlink bandwidth management method. This embodiment is applicable to at least two first network devices and a second network device, in which the at least two first network devices share a transmission channel to perform data transmission with the second network device. Transmission bandwidth of the transmission channel is fixed, and remains stable before a network strategy changes. The at least two first network devices respectively possess transmission bandwidth, the transmission bandwidth respectively possessed by the at least two first network devices may be the same or different, and a sum of the transmission bandwidth respectively possessed by the at least two first network devices is less than or equal to the transmission bandwidth of the transmission channel. This embodiment includes the following steps.

Step 101: The second network device receives traffic information sent in real time by the first network devices.

In an embodiment of the present invention, the second network device may be an eNodeB, the first network devices may be S-GWs, and at least two S-GWs form an S-GW POOL. The traffic information describes a utilization rate of the transmission bandwidth, and may be load state information which reflects the utilization rate of the transmission bandwidth, for example, when the transmission bandwidth is downlink bandwidth, the traffic information may be downlink load state information; and when the transmission bandwidth is uplink bandwidth, the traffic information may be uplink load state information.

Step 102: The second network device adjusts transmission bandwidth of the at least two first network devices according to the traffic information and a preset adjustment rule.

After receiving the traffic information, the second network device may determine a state of the transmission bandwidth of the first network devices according to the traffic information, for example, a congested state, a normal state, and a light-loaded state.

The preset adjustment rule may be set in advance. In an embodiment of the present invention, the step of adjusting, by the second network device, the transmission bandwidth of the at least two first network devices according to the traffic information and the preset adjustment rule may include: reducing, by the second network device, the transmission bandwidth from a first network device being light-loaded according to the traffic information; and allocating, by the second network device, the reduced transmission bandwidth to a first network device being congested according to the traffic information.

Step 103. The second network device sends the adjusted transmission bandwidth information to the first network devices, so that the first network devices perform the data transmission based on the adjusted transmission bandwidth.

Specifically, the adjusted transmission bandwidth information may be sent to the first network devices through a bandwidth notification, so that the first network devices may perform the data transmission based on the adjusted transmission bandwidth; for example, the adjusted transmission bandwidth information sent to the first network device being light-loaded is the transmission bandwidth information after the reduction, and the adjusted transmission bandwidth information sent to the first network device being congested is the transmission bandwidth information after the allocation.

As different services have different requirements for QoS, when the data transmission is performed based on the adjusted transmission bandwidth, in order to enable the data transmission to satisfy the QoS requirements of the services, an operation of QoS traffic shaping may be performed according to the QoS requirements.

Based on the above, in this embodiment, after receiving the traffic information sent by the first network devices, the second network device may adjust the transmission bandwidth of the at least two first network devices according to the traffic information and the preset adjustment rule. Specifically, the transmission bandwidth of the first network devices being light-loaded may be transferred to the first network devices being congested, so that both the first network devices being light-loaded and the first network devices being congested have appropriate transmission bandwidth to perform the data transmission, so as to dynamically adjust the transmission bandwidth of the first network devices connected to the second network device. The first network devices having the bandwidth being adjusted may perform the data transmission according to the adjusted transmission bandwidth, so that use efficiency of the transmission bandwidth between the first network devices and the second network device is increased, and fairness of using the transmission bandwidth of the first network devices may be realized.

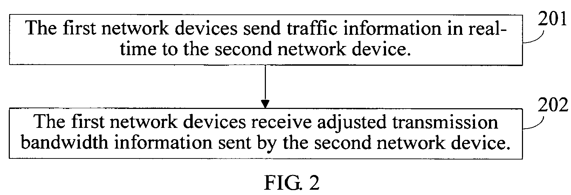

FIG. 2 describes a process of Embodiment 2 of a bandwidth management method. This embodiment is applicable to at least two first network devices and a second network device, in which the at least two first network devices share a transmission channel to perform data transmission with the second network device. This embodiment includes the following steps.

Step 201: The first network devices send traffic information in real time to the second network device.

Specifically, the first network devices may monitor the traffic information reaching the second network device in real time. In a congested state, the first network devices may actively send the traffic information to the second network device, or after receiving information sent by the second network device, the first network devices passively send the traffic information to the second network device, for example, under a trigger of a traffic information collection request.

Step 202: The first network devices receive adjusted transmission bandwidth information sent by the second network device, and perform the data transmission based on the adjusted transmission bandwidth, in which the adjusted transmission bandwidth is obtained by adjusting transmission bandwidth of the at least two first network devices by the second network device according to the traffic information and a preset adjustment rule.

If the traffic information sent by the first network devices shows that the first network devices are first network devices being light-loaded, the received adjusted transmission bandwidth information is transmission bandwidth information after reduction; and if the traffic information sent by the first network devices shows that the first network devices are first network devices being congested, the received adjusted transmission bandwidth information is transmission bandwidth information after allocation.

Based on the above, in this embodiment, the first network devices may send the traffic information to the second network device, and after receiving the traffic information sent by the first network devices, the second network device may adjust the transmission bandwidth of the at least two first network devices according to the traffic information and the preset adjustment rule. Specifically, the transmission bandwidth of the first network devices being light-loaded may be transferred to the first network devices being congested, so that both the first network devices being light-loaded and the first network devices being congested have appropriate transmission bandwidth to perform the data transmission, so as to dynamically adjust the transmission bandwidth of the first network devices connected to the second network device. The first network devices having the bandwidth being adjusted may perform the data transmission according to the adjusted transmission bandwidth, so that use efficiency of the transmission bandwidth between the first network devices and the second network device is increased, and fairness of using the transmission bandwidth of the first network devices may be realized.

FIG. 3 describes a process of Embodiment 3 of a bandwidth management method. In this embodiment, first network devices are S-GWs in an S-GW POOL, a second network device is an eNodeB, and traffic information is downlink load state information. This embodiment describes a processing procedure of the eNodeB, which includes the following steps.

Step 301: Receive the downlink load state information sent by the S-GW in the S-GW POOL. Specifically, the downlink load state information received by the eNodeB may be carried through an Echo Request/Echo Response (Echo Request/Echo Response) message in an extended Third Generation Partnership Project GPRS Tunneling Protocol (3GPP GTP) (GTP version 1 and GTP version 2 are included), or may be carried through a GPRS Tunneling Protocol for user plane (GTP-U, GPRS Tunneling Protocol for user plane) packet, or may be carried through other extended messages.

In an embodiment of the present invention, the downlink load state of the S-GW is determined by two parts: an occupancy rate of downlink bandwidth from the S-GW to the eNodeB and/or a downlink packet buffer rate of the eNodeB on the S-GW, in which
the occupancy rate of downlink bandwidth = downlink bandwidth currently used by E2E / available downlink bandwidth currently allocated to the E2E of the S-GW; and
the packet buffer rate identifies a downlink packet buffer degree for the eNodeB when the S-GW perform QoS traffic shaping.

When the occupancy rate of downlink bandwidth <100%, the downlink load state of the S-GW may be reflected by the occupancy rate of downlink bandwidth; and when the occupancy rate of downlink bandwidth reaches 100%, in addition to the occupancy rate of downlink bandwidth, the packet buffer rate is required to be used together to reflect the downlink load state of the S-GW. Based on the load state mapped by the occupancy rate of downlink bandwidth and the packet buffer rate, the downlink load state of the S-GW may be classified into a light-loaded state, a normal state, and a congested state.

As the downlink load of the S-GW has certain suddenness, in the embodiment of the present invention, the downlink load may be an average downlink load of the S-GW within a recent period of time, so that the load state can accurately reflect a use condition of the downlink bandwidth of the S-GW.

In an embodiment of the present invention, before the receiving, by the eNodeB, the downlink load state information sent by the S-GWs in the S-GW POOL, the method may further include: receiving a congestion state report sent by an S-GW being congested; and sending a traffic information collection request to other S-GWs in the S-GW POOL under the trigger of the congestion state report, then sending, by the S-GWs receiving the traffic information collection request, the current downlink load state information of the S-GWs to the eNodeB. Step 302: Reduce the downlink bandwidth from an S-GW being light-loaded according to the downlink load state information.

The downlink load state of the S-GWs may be classified into a light-loaded state, a normal state, and a congested state, and a specific scope may be configured. In an embodiment of the present invention, the downlink load state of the S-GWs may be classified as follows. When being 0% to 39%, the downlink load state is a light-loaded state; when being 40% to 69%, the downlink load state is a normal state; and when being 70% to 100%, the downlink load state is a congested state.

In an embodiment of the present invention, based on a requirement of a principle of the S-GW POOL, when the eNodeB selects the S-GWs, load sharing is usually adopted. Initial transmission bandwidth may be allocated to the S-GWs with reference to network planning, bandwidth occupancy weights of the S-GWs, and probability statistics, so that the loads are evenly allocated. Therefore, it may be regarded that the loads of the S-GWs in the S-GW POOL are approximately even within a long period of time, but the loads of the S-GWs may be not even within a short period of time because service traffic has certain suddenness. Based on this, a minor adjustment principle is obeyed for adjusting the downlink bandwidth of the S-GW, and a very large range is not appropriate for each adjustment, very high adjustment frequency is also not appropriate, and the eNodeB is triggered to perform adjustment based on the load congested state of the S-GW. During each round of the adjustment, when the downlink bandwidth is reduced from the S-GW being light-loaded, the downlink bandwidth may be reduced from the S-GW being light-loaded according to a preset adjustment granularity, in which the adjustment granularity is a maximum value for adjusting the bandwidth when the downlink bandwidth adjustment is performed on the S-GW, so as to prevent too large adjustment range. In an embodiment of the present invention, the adjustment granularity may be set to be 1/10 of the initial downlink bandwidth of the corresponding S-GW, in which the initial downlink bandwidth is the downlink bandwidth initially allocated to the S-GW by a system.

When a plurality of S-GWs being light-loaded exists, the downlink bandwidth may be preferentially reduced from the S-GW having the lightest load.

Step 302 may be performed only when an S-GW having a downlink load state being the congested state exists in the S-GW POOL.

Step 303: Allocate the reduced downlink bandwidth to the S-GW being congested according to the downlink load state information.

When a plurality of S-GWs being congested exists, the downlink bandwidth may be preferentially allocated to the S-GW being most congested.

In an embodiment of the present invention, based on the requirement of the principle of the S-GW POOL, when the eNodeB selects the S-GWs, load sharing is usually adopted. Initial transmission bandwidth may be allocated to the S-GWs with reference to network planning, bandwidth occupancy weights of the S-GWs, and probability statistics, so that the loads are evenly allocated. Therefore, it may be regarded that the loads of the S-GWs in the S-GW POOL are approximately even within a long period of time, but the loads of the S-GWs may be not even within a short period of time because service traffic has certain suddenness. Based on this, a minor adjustment principle is obeyed for adjusting the downlink bandwidth of the S-GW, and a very large range is not appropriate for each adjustment, very high adjustment frequency is also not appropriate, and the eNodeB is triggered to perform adjustment based on the load congested state of the S-GW. During each round of the adjustment, when the downlink bandwidth is allocated to the S-GW being congested, the downlink bandwidth is allocated to the S-GW being congested according to a preset adjustment granularity, in which in an embodiment of the present invention, the adjustment granularity may be set to be 1/10 of the initial downlink bandwidth of the corresponding S-GW.

Step 304: Send a bandwidth notification to the S-GW being light-loaded, in which the bandwidth notification includes the downlink bandwidth information of the S-GW being light-loaded after the reduction; and send a bandwidth notification to the S-GW being congested, in which the bandwidth notification includes the downlink bandwidth information of the S-GW being congested after the allocation.

After the bandwidth notification is sent to the S-GW being light-loaded, the S-GW being light-loaded performs the data transmission according to the downlink bandwidth after the reduction. Different services have different requirements for QoS, so when the data transmission is performed based on the downlink bandwidth after the reduction, in order to enable the data transmission to satisfy the QoS requirements of the services, an operation of QoS traffic shaping may be performed according to the QoS requirements.

After the bandwidth notification is sent to the S-GW being congested, the S-GW being congested performs the data transmission according to the downlink bandwidth after the allocation. Different services have different requirements for QoS, so when the data transmission is performed based on the downlink bandwidth after the allocation, in order to enable the data transmission to satisfy the QoS requirements of the services, an operation of QoS traffic shaping may be performed according to the QoS requirements.

Based on the above, in this embodiment, after receiving the downlink load state information sent by the S-GWs, the eNodeB may adjust the transmission bandwidth of the at least two S-GWs according to the downlink load state information and a preset adjustment rule. Specifically, the transmission bandwidth of the S-GW being light-loaded may be transferred to the S-GW being congested, so that both the S-GW being light-loaded and the S-GW being congested have appropriate transmission bandwidth to perform the data transmission, so as to dynamically adjust the transmission bandwidth of the S-GWs connected to the eNodeB. The S-GWs having the bandwidth being adjusted may perform the data transmission according to the adjusted transmission bandwidth, so that use efficiency of the transmission bandwidth between the S-GWs and the eNodeB is increased, and fairness of using the transmission bandwidth of the S-GWs may be realized.

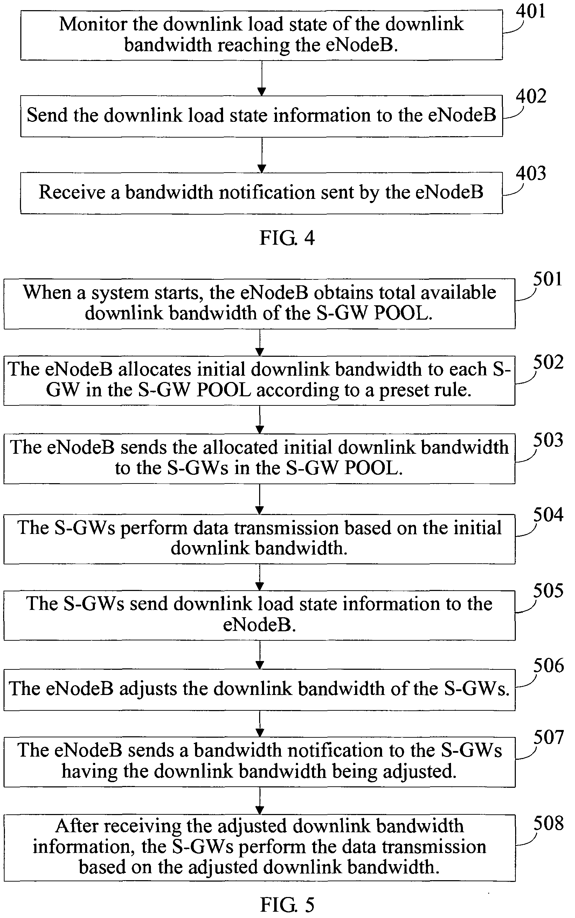

FIG. 4 describes a process of Embodiment 4 of a downlink bandwidth management method according to an embodiment of the present invention. In this embodiment, first network devices are S-GWs in an S-GW POOL, a second network device is an eNodeB, and downlink load state information of the S-GW is used as the traffic information. This embodiment describes a processing procedure of the S-GW in the S-GW POOL, which includes the following steps.
Step 401: Monitor the downlink load state of the downlink bandwidth reaching the eNodeB. In an embodiment of the present invention, the S-GW communicates with at least one eNodeB, so the S-GW respectively monitors the downlink load state of the downlink bandwidth reaching the at least one eNodeB. Step 401 is an optional step.
Step 402: Send the downlink load state information to the eNodeB, in which the downlink load state information identifies the downlink load state of the downlink bandwidth.

Specifically, in an embodiment of the present invention, the S-GW may send the downlink load state information to the eNodeB through an Echo request message or an Echo response message. In another embodiment of the present invention, the S-GW may send the downlink load state information to the eNodeB through a GTP-U packet. In still another embodiment of the present invention, the S-GW may send the downlink load state information to the eNodeB through other extended messages. The downlink load state information identifies the downlink load state of the downlink bandwidth reaching a determined eNodeB by the S-GW, so when the downlink load state information is sent to the eNodeB, the downlink load state information is specifically sent to the eNodeB which the downlink bandwidth corresponding to the downlink load state information reaches.

In an embodiment of the present invention, the S-GW communicates with at least one eNodeB, so the S-GW respectively monitors the downlink load state of the downlink bandwidth reaching the at least one eNodeB; therefore, the corresponding downlink load state information may be respectively sent to the at least one eNodeB.

Step 403: Receive a bandwidth notification sent by the eNodeB, in which the bandwidth notification includes adjusted downlink bandwidth information.

When the downlink bandwidth adjusted by the eNodeB changes, the corresponding S-GW will receive the bandwidth notification sent by the eNodeB. In an embodiment of the present invention, the received bandwidth notification may be carried through an Echo request message. In another embodiment of the present invention, the received bandwidth notification may be carried through a GTP-U packet. In still another embodiment of the present invention, the received bandwidth notification may be carried through other extended messages.

After receiving the bandwidth notification, the S-GW may perform data transmission based on the adjusted downlink bandwidth.

The adjusted downlink bandwidth in step 403 is different with the different downlink load states of the S-GW sent in step 402. If the downlink load state information of the S-GW sent in step 402 identifies that the S-GW is in a light-loaded state, the adjusted downlink bandwidth information in step 403 is the downlink bandwidth information after reduction, that is, the adjusted downlink bandwidth is less than the downlink bandwidth before the adjustment. If the downlink load state information of the S-GW sent in step 402 identifies that the S-GW is in a congested state, the adjusted downlink bandwidth information is the downlink bandwidth information after allocation, that is, the adjusted downlink bandwidth is greater than the downlink bandwidth before the adjustment.

Based on the above, in this embodiment, the S-GW may send the downlink load state information to the eNodeB, so that, after receiving the downlink load state information sent by the S-GWs, the eNodeB adjusts the transmission bandwidth of the at least two S-GWs according to the downlink load state information and a preset adjustment rule. Specifically, the transmission bandwidth of the S-GW being light-loaded may be transferred to the S-GW being congested, so that both the S-GW being light-loaded and the S-GW being congested have appropriate transmission bandwidth to perform the data transmission, so as to dynamically adjust the transmission bandwidth of the S-GWs connected to the eNodeB. The S-GWs having the bandwidth being adjusted may perform the data transmission according to the adjusted transmission bandwidth, so that use efficiency of the transmission bandwidth between the S-GWs and the eNodeB is increased, and fairness of using the transmission bandwidth of the S-GWs may be realized.

FIG. 5 describes a process of Embodiment 5 of a downlink bandwidth management method according to an embodiment of the present invention. In this embodiment, first network devices are S-GWs in an S-GW POOL, a second network device is an eNodeB, and downlink load state information of the S-GWs is used as the traffic information being a downlink load state. This embodiment describes an interaction process between the eNodeB and the S-GWs, which includes the following steps.
Step 501: When a system starts, the eNodeB obtains total available downlink bandwidth of the S-GW POOL, and it is assumed that the total available downlink bandwidth is MaxBW. Specifically, the eNodeB may detect the MaxBW through a dynamic bandwidth detection method; alternatively, the MaxBW is configured on the eNodeB in advance when backhaul downlink bandwidth is stable.
Step 502: The eNodeB allocates initial downlink bandwidth to each S-GW in the S-GW POOL according to a preset rule.

Specifically, the downlink bandwidth may be allocated to each S-GW according to bandwidth occupancy weights of the S-GWs. It is assumed that n S-GWs exist in the S-GW POOL, and the bandwidth occupancy weight of each S-GW may respectively be W1, W2, ... Wn, the initial downlink bandwidth of an i^{th} S-GW is MaxBW*Wi/(W1+W2+...+Wn), in which 0<i<n+1. Definitely, when the initial downlink bandwidth is allocated to the S-GWs, not only the bandwidth occupancy weight of each S-GW is considered, the number of users and/or other factors may also be taken into comprehensive consideration.

In an embodiment of the present invention, in order to enable each S-GW to maintain a certain service provision capability, it should be ensured that the allocated initial downlink bandwidth is not lower than a threshold value Thdi. The Thdi may be configured and adjusted as required. In the meantime, the Thdi has an upper limit, for example, when the downlink bandwidth is allocated based on the bandwidth occupancy weight of each S-GW, the Thdi may set to satisfy Thdi<= MaxBW*Wi/(W1+W2+...+Wn). The initial downlink bandwidth allocated to the S-GW is not lower than the threshold value, so as to ensure that each S-GW has a certain minimum service provision capability.

In this embodiment, initial transmission bandwidth is the initial downlink bandwidth; definitely, in other embodiments of the present invention, the initial transmission bandwidth may be initial uplink bandwidth.

The bandwidth occupancy weights of the S-GWs may be configured on the eNodeB in advance.
Step 503: The eNodeB sends the allocated initial downlink bandwidth to the S-GWs in the S-GW POOL.
Step 504: The S-GWs perform data transmission based on the initial downlink bandwidth.
Step 505: The S-GWs send downlink load state information to the eNodeB, in which the downlink load state information identifies the downlink load state of the downlink bandwidth. The downlink load state from the S-GWs to the eNodeB may be determined by an occupancy rate of downlink bandwidth and/or a packet buffer rate.
Step 506: The eNodeB adjusts the downlink bandwidth of the S-GWs.

In an embodiment of the present invention, when the downlink bandwidth of the S-GWs is adjusted, a following minor adjustment principle may be obeyed. The bandwidth is adjusted according to an adjustment granularity, in which the adjustment granularity is configurable, for example, in an embodiment of the present invention, the adjustment granularity is set to be 1/10 of the downlink bandwidth having the bandwidth occupancy weight corresponding to the S-GW, that is, the adjustment granularity=MaxBW*Wi/((W1+W2+...+Wn)*10)). No matter the downlink bandwidth is increased or reduced, each time a downlink bandwidth adjustment range of the S-GW does not exceed the corresponding adjustment granularity, so as to avoid the ping-pong effect.

The downlink bandwidth of S-GW having the load being in a normal state is neither increased nor reduced, the downlink bandwidth of an S-GW being light-loaded is reduced, and the reduced downlink bandwidth is allocated to an S-GW being congested. However, a basic requirement should be satisfied that after the downlink bandwidth of the S-GW being light-loaded is reduced, the load state of the S-GW should not be migrated to the congested state immediately.

Step 507: The eNodeB sends a bandwidth notification to the S-GWs having the downlink bandwidth being adjusted, in which the bandwidth notification includes the adjusted downlink bandwidth information.

Step 508: After receiving the adjusted downlink bandwidth information, the S-GWs perform the data transmission based on the adjusted downlink bandwidth.

Steps 505 to 508 may be circularly performed.

Based on the above, in this embodiment, after receiving the downlink load state information sent by the S-GWs, the eNodeB may adjust the transmission bandwidth of the at least two S-GWs according to the downlink load state information and a preset adjustment rule. Specifically, the transmission bandwidth of the S-GW being light-loaded may be transferred to the S-GW being congested, so that both the S-GW being light-loaded and the S-GW being congested have appropriate transmission bandwidth to perform the data transmission, so as to dynamically adjust the transmission bandwidth of the S-GWs connected to the eNodeB. The S-GWs having the bandwidth being adjusted may perform the data transmission according to the adjusted transmission bandwidth, so that use efficiency of the transmission bandwidth between the S-GWs and the eNodeB is increased, and fairness of using the transmission bandwidth of the S-GWs may be realized. Furthermore, the eNodeB may allocate the initial downlink bandwidth to the S-GWs according to the preset rule, so that relative fairness of bandwidth allocation among the S-GWs may be ensured.

A processing procedure of several possible special scenarios according to the embodiments of the present invention is respectively introduced in the following, in which the first network devices are the S-GWs in the S-GW POOL, the second network device is the eNodeB, and the downlink load state information of the S-GW is used as the traffic information.
1. When an S-GW in the S-GW POOL is out of service, service loads carried by the S-GW out of service are distributed to other S-GWs in the S-GW POOL subsequently, that is, the number of S-GWs in the S-GW POOL is reduced from n to n-1. The downlink bandwidth occupied by the S-GW out of service may be gradually allocated to the S-GWs being congested in the S-GW POOL according to the adjustment granularity. A reference of the specific allocation procedure may be made to step 306.
2. If an S-GW is newly added to the S-GW POOL, and the newly added S-GW is in an activated state and possesses a service provision capability, the number of S-GWs in the S-GW POOL is increased from n to n+1, and the newly added S-GW is required to be allocated with the downlink bandwidth. As rise of loads of the newly added S-GW has a procedure, referring to step 306, the newly added S-GW is treated as a most congested node, and in order to ensure a certain service provision capability, the downlink bandwidth allocated to the newly added S-GW for the first time is not lower than the threshold value Thdi.
3. When the eNodeB initially starts, at this time, whether each S-GW in the S-GW POOL has the service provision capability is unknown, so after the eNodeB establishes a connection with one of the S-GWs, the allocation of the downlink bandwidth is performed immediately. Specifically, the eNodeB may allocate the initial downlink bandwidth according to planning information of the S-GW POOL, and a reference of the allocation of the initial downlink bandwidth may be made to step 302. After a period of time, the S-GW which is still not detected to be online is processed as the S-GW out of service, and the length of the period of time is configurable. The planning information of the S-GW POOL may be configured on the eNodeB in advance.
4. As for an eNodeB, if the load of an S-GW in the S-GW POOL is in the congested state for a long time, and other S-GWs in the light-loaded state do not exist at this time, so no downlink bandwidth can be allocated to the S-GW being congested, and the system is in an abnormal state. At this time, the initial downlink bandwidth allocation state may be gradually restored according to the bandwidth occupancy weight of the S-GW or the planning information of the S-GW POOL, so as to ensure that each S-GW possesses an initially planned service load capability, and QoS scheduling of each S-GW preferentially ensures a real-time service.
   Conditions for restoring the initial downlink bandwidth allocation state are configurable, for example, the load state of the SGWs in the S-GW POOL and duration of the load state, in which the load state of the SGWs in the S-GW POOL includes that how many S-GWs in the S-GW POOL are in the congested state and how many S-GWs in the S-GW POOL are in the normal state.
   When the initial downlink bandwidth allocation state is restored, as for each S-GW, the initial downlink bandwidth corresponding to the S-GW is an objective, and the bandwidth adjustment is performed according to the adjustment granularity corresponding to the S-GW, so as to ensure that each time the adjustment range is not greater than the adjustment granularity corresponding to the S-GW. If the currently available downlink bandwidth of the S-GW is less than the initial downlink bandwidth, the downlink bandwidth is required to be increased for the S-GW, so as to enable the downlink bandwidth of the S-GW to gradually reach the initial downlink bandwidth. If the currently available downlink bandwidth of the S-GW is greater than the initial downlink bandwidth, the downlink bandwidth of the S-GW is required to be reduced, so as to enable the downlink bandwidth of the S-GW to gradually decrease to the initial downlink bandwidth. The adjustment result of the downlink bandwidth is that after increasing or reducing the downlink bandwidth for the S-GW, the downlink bandwidth of the S-GW is close to or equal to the initial downlink bandwidth corresponding to the S-GW.
5. When the total available downlink bandwidth of the S-GW POOL dynamically changes, if the dynamically detected change of the total available downlink bandwidth of the S-GW POOL is great, the eNodeB is required to restore the initial downlink bandwidth allocation state; otherwise, a downlink packet of the S-GW may be discarded or the downlink bandwidth is not fully used. Conditions for restoring the initial downlink bandwidth allocation state are configurable, for example, a change range of the total available downlink bandwidth of the S-GW POOL exceeds a certain scope. When the initial downlink bandwidth allocation state is restored, a reference may be made to steps 302 to 307. Then, based on the congested state of the S-GW, the bandwidth adjustment is triggered, and a relatively reasonable allocation of the downlink bandwidth of the S-GW POOL is gradually reached.
6. When the S-GW is required to perform data transmission with a certain eNodeB through other eNodeBs, the certain eNodeB may be called a leaf eNodeB, and other eNodeBs may be called convergence eNodeBs. A packet from the leaf eNodeB to the S-GW in the S-GW POOL is required to be forwarded by the intermediate convergence eNodeBs. As for the S-GW, in view of backhaul management, the certain eNodeB and other eNodeBs are considered as an eNodeB group logically, and the S-GW may treat the eNodeB group as a logically independent eNodeB.
7. When the bandwidth management method provided by the embodiments of the present invention is implemented, an interaction between the eNodeB and the S-GW requires extending the GTP (an Echo request/Echo response information element (IE) or a GTP-U packet header), and therefore, when only a part of S-GWs in the S-GW POOL support the extension and interaction processing capability, the downlink bandwidth adjustment may be performed only among this part of the S-GWs, and the downlink bandwidth is reserved for other S-GWs.

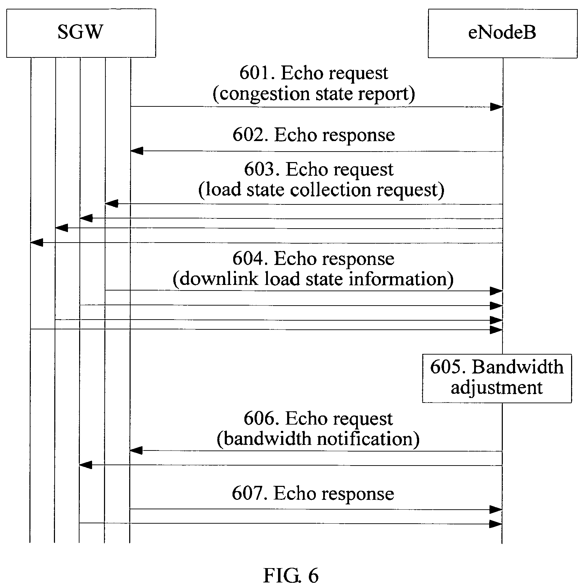

FIG. 6 describes a signaling process of Embodiment 4 of a downlink bandwidth management method according to an embodiment of the present invention. In this embodiment, first network devices are S-GWs in an S-GW POOL, a second network device is an eNodeB, and traffic information is downlink load state information. In this embodiment, an information interaction between the eNodeB and the S-GW is performed through an Echo request and an Echo response. This embodiment describes a processing procedure between the S-GW and the eNodeB after the S-GW in the S-GW POOL obtains initial downlink bandwidth, and includes the following steps.
Step 601: The S-GWs in the S-GW POOL monitor the downlink load state in real time, and when a certain S-GW finds that the downlink load state thereof is a congested state, the S-GW sends a congestion state report to the eNodeB through an Echo request to report that the downlink load state thereof is the congested state.
Step 602: After receiving the congestion state report sent by the S-GW through the Echo request, the eNodeB sends an Echo response to the S-GW.
Step 603: After receiving the congestion state report sent by a certain S-GW in the S-GW POOL, the eNodeB sends a traffic information collection request to other S-GWs in the S-GW POOL through an Echo request. Specifically, the eNodeB may send the traffic information collection request to S-GWs which do not send the downlink load state information in a recent period of time, so as to collect the downlink load states of the S-GWs which do not send the downlink load state information in a recent period of time in the S-GW POOL, in which the length of the period of time may be configured as required.
Step 604: The S-GW receiving the traffic information collection request sends the downlink load state information thereof to the eNodeB through an Echo response.

The S-GWs monitor the downlink load state in real time; therefore, after receiving the traffic information collection request, the S-GWs may send the downlink load state information thereof to the eNodeB immediately.

It is impossible for the downlink load state information of each S-GW to reach the eNodeB at the same time; therefore, the eNodeB may regard that the reached downlink load state information of the S-GW in a period of time shows the current downlink load state of the S-GW.

Step 605: The eNodeB performs the downlink bandwidth adjustment according to the received downlink load state information of the S-GW and a preset adjustment rule.

The step may be specifically performed with reference to step 306.

Step 606: The eNodeB sends a bandwidth notification to the S-GW having the downlink bandwidth being adjusted through an Echo request, in which the bandwidth notification includes the adjusted downlink bandwidth information of the S-GW.

If the downlink load state information sent by the S-GW identifies that the S-GW is an S-GW being light-loaded, the received adjusted transmission bandwidth is the transmission bandwidth after reduction; and if the downlink load state information sent by the S-GW identifies that the S-GW is an S-GW being congested, the received adjusted transmission bandwidth is the transmission bandwidth after allocation. Optionally, if the S-GW receives the bandwidth notification, but the bandwidth notification does not include the adjusted downlink bandwidth information thereof, that is, the downlink bandwidth of the S-GW is not adjusted, so the S-GW does not process the bandwidth notification or directly discards the bandwidth notification.

Step 607: After receiving the adjusted downlink bandwidth information, the S-GW sends an Echo response to the eNodeB.

A standard Information Element that may carry the congestion state report, the traffic information collection request, the downlink load state information, and the bandwidth notification does not exist in the existing 3GPP GTP Echo Request/Echo Response, therefore, Private Extension Information Element (Private Extension Information Element) may be performed based on the existing Echo Request and Echo Response, so that the Echo Request and the Echo Response can carry the congestion state report, the traffic information collection request, the downlink load state information, and the bandwidth notification through the Private Extension Information Element. According to an embodiment of the present invention, the Private Extension Information Element extended based on the Echo Request and the Echo Response is shown in Table 1. The Private Extension Information Element provided by the embodiment of the present invention may be applicable to GTP version 1 and GTP version 2.

**Table 1**

| **Type (Type)** | **Function** | **Format** | **Command Flow Direction** | **Involved Messages** |
|---|---|---|---|---|
| IE1 (IE1) | The S-GW reports/sends the downlink load state to the eNodeB. | S-GW load state×100:1byte | S-GW to eNodeB | Echo Request, Echo Response |
| IE2 | The eNodeB actively collects the downlink load state of each S-GW. | NA | eNodeB to S-GW | Echo Request |
| IE3 | The eNodeB notifies adjusted downlink bandwidth to the corresponding S-GW. | Downlink bandwidth:4bytes (unit:k bytes) | eNodeB to S-GW | Echo Request |
| IE4 | Echo (response corresponding to the IE1/IE2/IE3 in the Echo Request message) | NA | S-GW to eNodeB eNodeB to S-GW | Echo Response |

In Table 1, four private extension IEs cannot be in collision with other IE types in use, the Echo Request and the Echo Response message may carry one of the four private extension IEs, or may not carry any one of the four private extension IEs (that is, non-extended standard message).

Based on the above, in this embodiment, after receiving the downlink load state information sent by the S-GWs, the eNodeB may adjust the transmission bandwidth of the at least two S-GWs according to the downlink load state information and the preset adjustment rule. Specifically, the transmission bandwidth of the S-GW being light-loaded may be transferred to the S-GW being congested, so that both the S-GW being light-loaded and the S-GW being congested have appropriate transmission bandwidth to perform the data transmission, so as to dynamically adjust the transmission bandwidth of the S-GWs connected to the eNodeB. The S-GWs having the bandwidth being adjusted may perform the data transmission according to the adjusted transmission bandwidth, so that use efficiency of the transmission bandwidth between the S-GWs and the eNodeB is increased, and fairness of using the transmission bandwidth of the S-GWs may be realized.

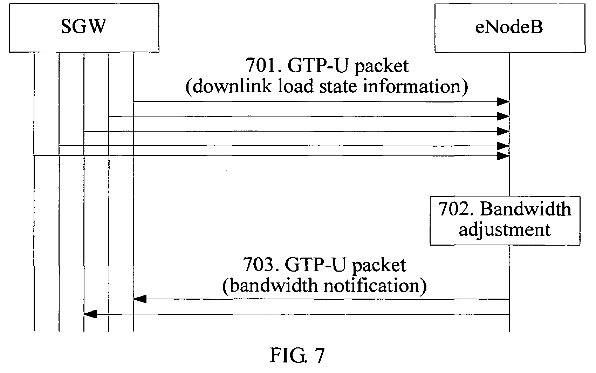

FIG. 7 describes a signaling process of Embodiment 7 of a downlink bandwidth management method according to an embodiment of the present invention. In this embodiment, first network devices are S-GWs in an S-GW POOL, a second network device is an eNodeB, and traffic information is downlink load state information. In this embodiment, an information interaction between the eNodeB and the S-GWs is performed through a GTP-U packet. This embodiment describes a processing procedure between the S-GW and the eNodeB after the S-GW in the S-GW POOL obtains initial downlink bandwidth, which includes the following steps.
Step 701: Each S-GW in the S-GW POOL monitors the downlink load state in real time, and sends the downlink load state information to the eNodeB through a GTP-U packet, in which the downlink load state information is specifically carried in a GTP-U packet header. The S-GW actively sends the downlink load state information to the eNodeB through the GTP-U packet when the S-GW is in a congested state; and the S-GW periodically sends the downlink load state information to the eNodeB through the GTP-U packet when the S-GW is in a light-loaded state or a normal state, in which the period is configurable.
Step 702: The eNodeB performs the downlink bandwidth adjustment according to the received downlink load state information of the S-GW and a preset adjustment rule.

This step is performed only when the downlink load state of the S-GW is the congested state, and may be specifically performed with reference to step 506.

Step 703: The eNodeB sends a bandwidth notification to the S-GW having the downlink bandwidth being adjusted through a GTP-U packet, in which the bandwidth notification includes the adjusted downlink bandwidth information, and may be specifically carried through a GTP-U packet header.

The existing GTP-U packet header cannot carry the downlink load state information and the bandwidth notification; therefore, extension is required to be performed based on an Extension Header (EH, Extension Header) of the existing GTP-U packet header. The extended EH of the GTP-U packet header provided by the embodiment of the present invention may be applicable to GTP version 1 and GTP version 2.

In an embodiment of the present invention, the extended EH of the GTP-U packet header is as shown in Table 2.

**Table 2**

| **Type** | **Function** | **Format** | **Command Flow Direction** |
|---|---|---|---|
| EH1 | The S-GW sends the load state to the eNodeB. | Load state×100:1 byte | S-GW to eNodeB |
| EH2 | The eNodeB notifies adjusted bandwidth to the corresponding S-GW. | Downlink bandwidth:4bytes (unit: k bytes) | eNodeB to S-GW |
| EH3 | Echo (response corresponding to the EH2) | NA | S-GW to eNodeB |

In Table 2, three EHs of the GTP-U packet headers cannot be in collision with other EH types in use.

Based on the above, in this embodiment, after receiving the downlink load state information sent by the S-GWs, the eNodeB may adjust the transmission bandwidth of the at least two S-GWs according to the downlink load state information and the preset adjustment rule. Specifically, the transmission bandwidth of the S-GW being light-loaded may be transferred to the S-GW being congested, so that both the S-GW being light-loaded and the S-GW being congested have appropriate transmission bandwidth to perform the data transmission, so as to dynamically adjust the transmission bandwidth of the S-GWs connected to the eNodeB. The S-GWs having the bandwidth being adjusted may perform the data transmission according to the adjusted transmission bandwidth, so that use efficiency of the transmission bandwidth between the S-GWs and the eNodeB is increased, and fairness of using the transmission bandwidth of the S-GWs may be realized.

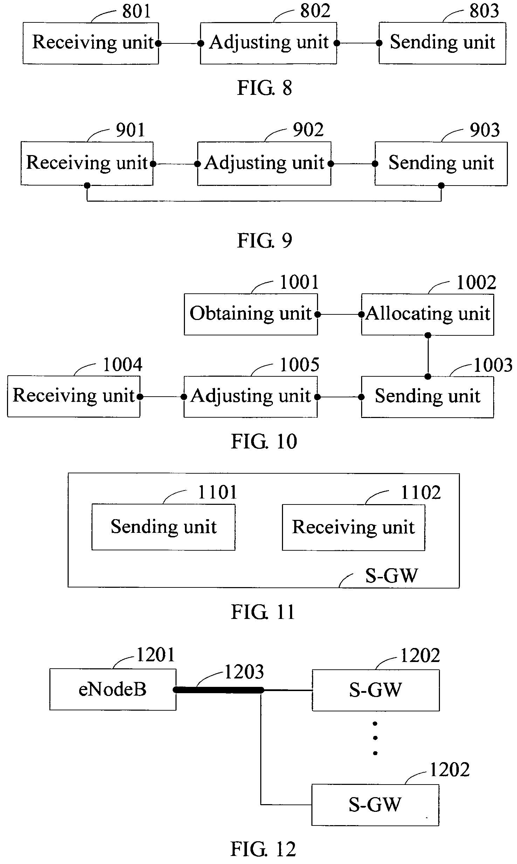

An eNodeB provided by an embodiment of the present invention is introduced. FIG. 8 describes a structure of Embodiment 1 of the eNodeB. The eNodeB is connected to at least two first network devices, in which the at least two first network devices share a transmission channel to perform data transmission with the eNodeB. The eNodeB includes:
a receiving unit 801, configured to receive traffic information sent in real time by the first network devices.
an adjusting unit 802, configured to adjust transmission bandwidth of the at least two first network devices according to the traffic information received by the receiving unit 801 and a preset adjustment rule; and
a sending unit 803, configured to send the transmission bandwidth information adjusted by the adjusting unit 802 to the first network devices, so that the first network devices perform the data transmission based on the adjusted transmission bandwidth.

Based on the above, in this embodiment, after receiving the traffic information sent by the first network devices, the eNodeB may adjust the transmission bandwidth of the at least two first network devices according to the traffic information and the preset adjustment rule. Specifically, the transmission bandwidth of an S-GW being light-loaded may be transferred to an S-GW being congested, so that both the S-GW being light-loaded and the S-GW being congested have appropriate transmission bandwidth to perform the data transmission, so as to dynamically adjust the transmission bandwidth of the first network devices connected to the eNodeB. The first network devices having the bandwidth being adjusted may perform the data transmission according to the adjusted transmission bandwidth, so that use efficiency of the transmission bandwidth between the first network devices and the eNodeB is increased, and fairness of using the transmission bandwidth of the first network devices may be realized. FIG. 9 describes a structure of Embodiment 2 of an eNodeB. The eNodeB is connected to at least two first network devices, in which the at least two first network devices share a transmission channel to perform data transmission with the eNodeB. The eNodeB includes:
a receiving unit 901, configured to receive a congestion state report sent by a first network device being congested;
a sending unit 903, configured to send a traffic information collection request to the first network device other than the first network device being congested in the at least two first network devices under a trigger of the congestion state report received by the receiving unit 901;
the receiving unit 901, further configured to receive traffic information sent in real time by the first network devices after the sending unit 903 sends the traffic information collection request;
an adjusting unit 902, configured to adjust transmission bandwidth of the at least two first network devices according to the traffic information received by the receiving unit 901 and a preset adjustment rule; and
the sending unit 903, further configured to send the transmission bandwidth information adjusted by the adjusting unit to the first network devices, so that the first network devices perform the data transmission based on the adjusted transmission bandwidth.

Based on the above, in this embodiment, after receiving the traffic information sent by the first network devices, the eNodeB may adjust the transmission bandwidth of the at least two first network devices according to the traffic information and the preset adjustment rule. Specifically, the transmission bandwidth of an S-GW being light-loaded may be transferred to an S-GW being congested, so that both the S-GW being light-loaded and the S-GW being congested have appropriate transmission bandwidth to perform the data transmission, so as to dynamically adjust the transmission bandwidth of the first network devices connected to the eNodeB. The first network devices having the bandwidth being adjusted may perform the data transmission according to the adjusted transmission bandwidth, so that use efficiency of the transmission bandwidth between the first network devices and the eNodeB is increased, and fairness of using the transmission bandwidth of the first network devices may be realized. FIG. 10 describes a structure of Embodiment 3 of an eNodeB. The eNodeB is connected to at least two first network devices, in which the at least two first network devices share a transmission channel to perform data transmission with the eNodeB. The eNodeB includes:
an obtaining unit 1001, configured to obtain transmission bandwidth of the transmission channel;
an allocating unit 1002, configured to allocate initial transmission bandwidth to the at least two first network devices according to a preset rule and the transmission bandwidth obtained by the obtaining unit 1001;
a sending unit 1003, configured to send the initial transmission bandwidth information allocated by the allocating unit 1002 to the at least two first network devices;
a receiving unit 1004, configured to receive traffic information sent in real time by the first network devices;
an adjusting unit 1005, configured to adjust transmission bandwidth of the at least two first network devices according to the traffic information received by the receiving unit 1004 and a preset adjustment rule; and
the sending unit 1003, further configured to send the transmission bandwidth information adjusted by the adjusting unit 1005 to the first network devices, so that the first network devices perform the data transmission based on the adjusted transmission bandwidth.

Based on the above, in this embodiment, after receiving the traffic information sent by the first network devices, the eNodeB may adjust the transmission bandwidth of the at least two first network devices according to the traffic information and the preset adjustment rule. Specifically, the transmission bandwidth of an S-GW being light-loaded may be transferred to an S-GW being congested, so that both the S-GW being light-loaded and the S-GW being congested have appropriate transmission bandwidth to perform the data transmission, so as to dynamically adjust the transmission bandwidth of the first network devices connected to the eNodeB. The first network devices having the bandwidth being adjusted may perform the data transmission according to the adjusted transmission bandwidth, so that use efficiency of the transmission bandwidth between the first network devices and the eNodeB is increased, and fairness of using the transmission bandwidth of the first network devices may be realized. Furthermore, the network device may allocate the initial transmission bandwidth to the first network devices according to the preset rule, so that relative fairness of bandwidth allocation among the first network devices may be ensured.

FIG. 11 describes a structure of an embodiment of an S-GW. The S-GW is connected to a second network device, in which the second network device is further connected to at least another S-GW, and the S-GW and the at least another S-GW share a transmission channel to perform data transmission with the second network device. The S-GW includes:
a sending unit 1101 , configured to send traffic information in real time to the second network device; and
a receiving unit 1103, configured to receive adjusted transmission bandwidth information sent by the second network device, and perform the data transmission based on the adjusted transmission bandwidth, in which the adjusted transmission bandwidth is obtained by adjusting transmission bandwidth of at least two first network devices by the second network device according to the traffic information and a preset adjustment rule.

Based on the above, in this embodiment, the S-GWs may send the traffic information to the second network device, after receiving the traffic information sent by the S-GWs, the second network device may adjust the transmission bandwidth of the at least two S-GWs according to the traffic information and the preset adjustment rule. Specifically, the transmission bandwidth of an S-GW being light-loaded may be transferred to an S-GW being congested, so that both the S-GW being light-loaded and the S-GW being congested have appropriate transmission bandwidth to perform the data transmission, so as to dynamically adjust the transmission bandwidth of the S-GWs connected to the second network device. The S-GWs having the bandwidth being adjusted may perform the data transmission according to the adjusted transmission bandwidth, so that use efficiency of the transmission bandwidth between the S-GWs and the second network device is increased, and fairness of using the transmission bandwidth of the S-GWs may be realized.

According to the embodiment of the S-GW of the present invention, the receiving unit 1103 may be further configured to receive a traffic information collection request from the second network device. In the S-GW, the sending unit 1102 sends the traffic information monitored by the monitoring unit 1101 to the second network device only after the receiving unit 1103 receives the load collection request. In the S-GW, the sending unit 1102 may be further configured to send a congestion state report to the second network device, so that the second network device sends the traffic information collection request.

According to the embodiment of the S-GW of the present invention, the receiving unit 1103 may be further configured to receive initial transmission bandwidth allocated by the second network device, so that the S-GW may perform the data transmission based on the initial transmission bandwidth.

A communication system is provided according to an embodiment of the present invention. FIG. 12 describes a structure of an embodiment of the communication system. The communication system includes an eNodeB 1201 and at least two S-GWs 1202, in which the at least two S-GWs 1202 share a transmission channel 1203 to perform data transmission with the eNodeB 1201.

The eNodeB 1201 is configured to receive traffic information sent in real time by the S-GWs 1202, in which the S-GWs sending the traffic information may be a part of or all of the at least two S-GWs; adjust transmission bandwidth of the at least two S-GWs 1202 according to the traffic information and a preset adjustment rule; and send the adjusted transmission bandwidth information to the S-GWs 1202.

The S-GWs 1202 are configured to receive the adjusted transmission bandwidth information sent by the eNodeB 1201, and perform the data transmission based on the adjusted transmission bandwidth.

In this embodiment, after receiving the downlink load state information sent by the S-GWs, the eNodeB may adjust the transmission bandwidth of the at least two S-GWs according to the downlink load state information and the preset adjustment rule. Specifically, the transmission bandwidth of an S-GW being light-loaded may be transferred to an S-GW being congested, so that both the S-GW being light-loaded and the S-GW being congested have appropriate transmission bandwidth to perform the data transmission, so as to dynamically adjust the transmission bandwidth of the S-GWs connected to the eNodeB. The S-GWs having the bandwidth being adjusted may perform the data transmission according to the adjusted transmission bandwidth, so that use efficiency of the transmission bandwidth between the S-GWs and the eNodeB is increased, and fairness of using the transmission bandwidth of the S-GWs may be realized.

Furthermore, in an embodiment of the present invention, the eNodeB 1201 may be further configured to obtain transmission bandwidth of the transmission channel during initialization; allocate initial transmission bandwidth to the at least two S-GWs 1202 according to a preset rule and the traffic information; and send the allocated initial transmission bandwidth information to the at least two S-GWs.

The S-GWs 1202 may be further configured to receive the initial transmission bandwidth information sent by the eNodeB 1201 during the initialization, and perform the data transmission based on the initial transmission bandwidth. The eNodeB may allocate the initial bandwidth to the S-GWs according to the preset rule during the initialization, so that relative fairness of the bandwidth allocation among the S-GWs during the initialization may be ensured.

It may be seen from the technical solutions provided by the embodiments of the present invention that, in the embodiments of the present invention, after receiving the traffic information sent by the first network devices, the second network device may adjust the transmission bandwidth of the at least two first network devices according to the traffic information and the preset adjustment rule, so as to dynamically adjust the transmission bandwidth of the first network devices connected to the second network device. The first network devices having the bandwidth being adjusted may perform the data transmission according to the adjusted transmission bandwidth, so that use efficiency of the transmission bandwidth between the first network devices and the second network device is increased, and fairness of using the transmission bandwidth of the first network devices may be realized. Persons of ordinary skill in the art should understand that, all or a part of processes in the method according to the embodiments may be accomplished by relevant hardware under instructions of a computer program. The program may be stored in a computer readable storage medium. When the program is run, the processes of the method according to the embodiments of the present invention are performed. The storage medium may be a magnetic disk, an optical disk, a Read-Only Memory (ROM), Random Access Memory (RAM), or the like.

The bandwidth management method, the eNodeB, the S-GW, and the communication system provided by the embodiments of the present invention are described in detail. The description about the embodiments of the present invention is merely provided for ease of understanding of the method and core ideas of the present invention. Persons of ordinary skill in the art can make variations and modifications to the present invention in terms of the specific implementations and application scopes according to the ideas of the present invention. Therefore, the specification shall not be construed as a limit to the present invention.

## Claims

1. A bandwidth management method, **characterized in that**, applicable to at least two first network devices and a second network device, wherein the at least two first network devices share a transmission channel to perform data transmission with the second network device, the method comprising:
sending, by the first network devices, traffic information in real-time to the second network device; and
receiving, by the first network devices, adjusted transmission bandwidth information sent by the second network device, and performing the data transmission based on the adjusted transmission bandwidth, wherein the adjusted transmission bandwidth is obtained by the second network device through adjusting transmission bandwidth of the at least two first network devices according to the traffic information and a preset adjustment rule;
wherein the adjusting the transmission bandwidth of the at least two first network devices according to the traffic information and the preset adjustment rule comprises:
reducing the transmission bandwidth from a first network device being light-loaded of the at least two first network devices according to the traffic information; and allocating the reduced transmission bandwidth to a first network device being congested of the at least two first network devices according to the traffic information.

2. The bandwidth management method according to claim 1, wherein sending, by the first network devices, traffic information in real-time to the second network device comprising:
sending, by the first network devices, the traffic information in real-time to the second network device when a downlink load state of the first network devices is a congested state; or
sending, by the first network devices, the traffic information in real-time to the second network device after the first network devices receive a traffic information collection request from the second network device.

3. The bandwidth management method according to claim 1, wherein before sending, by the first network devices, traffic information in real-time to the second network device, the method further comprises:
receiving, by the first network devices, initial transmission bandwidth information sent by the second network device during initialization;
performing, by the first network devices, the data transmission based on the initial transmission bandwidth.

4. A Serving Gateway, S-GW, **characterized in that**, connected to a second network device, wherein the second network device is further connected to at least another S-GW, the S-GW and the at least another S-GW share a transmission channel to perform data transmission with the second network device, the S-GW comprising:
a sending unit (1101), configured to send traffic information in real-time to the second network device; and
a receiving unit (1102), configured to receive adjusted transmission bandwidth information sent by the second network device, and perform the data transmission based on the adjusted transmission bandwidth, wherein the adjusted transmission bandwidth is obtained by adjusting transmission bandwidth of at least two first network devices by the second network device according to the traffic information and a preset adjustment rule;
wherein the adjusting the transmission bandwidth of the at least two first network devices according to the traffic information and the preset adjustment rule comprises:
reducing the transmission bandwidth from a first network device being light-loaded of the at least two first network devices according to the traffic information; and allocating the reduced transmission bandwidth to a first network device being congested of the at least two first network devices according to the traffic information.

5. The S-GW according to claim 4, wherein the receiving unit 1102 is further configured to receive a traffic information collection request from the second network device; and
the sending unit 1101 sends the traffic information in real-time to the second network device only after the receiving unit 1102 receives the load collection request.

6. The S-GW according to claim 5, wherein the sending unit 1101 is further configured to send a congestion state report to the second network device to make the second network device send the traffic information collection request.

7. The S-GW according to claim 4, wherein the receiving unit 1102 is further configured to receive initial transmission bandwidth allocated by the second network device, so that the S-GW perform data transmission based on the initial transmission bandwidth.

## Patentansprüche

1. Bandbreitenverwaltungsverfahren, **dadurch gekennzeichnet, dass** es auf mindestens zwei erste Netzwerkvorrichtungen und eine zweite Netzwerkvorrichtung anwendbar ist, wobei die mindestens zwei ersten Netzwerkvorrichtungen einen Übertragungskanal gemeinsam nutzen, um Datenübertragung mit der zweiten Netzwerkvorrichtung durchzuführen, wobei das Verfahren umfasst:
Senden durch die ersten Netzwerkvorrichtungen von Verkehrsinformationen in Echtzeit an die zweite Netzwerkvorrichtung; und
Empfangen durch die ersten Netzwerkvorrichtungen angepasster Übertragungsbandbreiteninformationen, die durch die zweite Netzwerkvorrichtung gesendet werden, und Durchführen der Datenübertragung auf der Basis der angepassten Übertragungsbandbreite, wobei die angepasste Übertragungsbandbreite durch die zweite Netzwerkvorrichtung durch Anpassen von Übertragungsbandbreite der mindestens zwei ersten Netzwerkvorrichtungen gemäß den Verkehrsinformationen und einer voreingestellten Anpassungsregel erhalten wird;
wobei das Anpassen der Übertragungsbandbreite der mindestens zwei ersten Netzwerkvorrichtungen gemäß den Verkehrsinformationen und der voreingestellten Anpassungsregel umfasst: Reduzieren der Übertragungsbandbreite von einer ersten Netzwerkvorrichtung der mindestens zwei ersten Netzwerkvorrichtungen, die leicht ausgelastet ist, gemäß den Verkehrsinformationen; und Zuweisen der reduzierten Übertragungsbandbreite zu einer ersten Netzwerkvorrichtung der mindestens zwei ersten Netzwerkvorrichtungen, die überlastet ist, gemäß den Verkehrsinformationen.

2. Bandbreitenverwaltungsverfahren nach Anspruch 1, wobei das Senden durch die ersten Netzwerkvorrichtungen von Verkehrsinformationen in Echtzeit an die zweite Netzwerkvorrichtung umfasst:
Senden durch die ersten Netzwerkvorrichtungen der Verkehrsinformationen in Echtzeit an die zweite Netzwerkvorrichtung, wenn ein Downlink-Ladezustand der ersten Netzwerkvorrichtungen ein überlasteter Zustand ist; oder
Senden durch die ersten Netzwerkvorrichtungen der Verkehrsinformationen in Echtzeit an die zweite Netzwerkvorrichtung, nachdem die ersten Netzwerkvorrichtungen eine Abholungsanforderung von Verkehrsinformationen von der zweiten Netzwerkvorrichtung empfangen.

3. Bandbreitenverwaltungsverfahren nach Anspruch 1, wobei vor dem Senden durch die ersten Netzwerkvorrichtungen von Verkehrsinformationen in Echtzeit an die zweite Netzwerkvorrichtung das Verfahren des Weiteren umfasst:
Empfangen durch die ersten Netzwerkvorrichtungen von anfänglichen Übertragungsbandbreiteninformationen, die durch die zweite Netzwerkvorrichtung während der Initialisierung gesendet wurden;
Durchführen durch die ersten Netzwerkvorrichtungen der Datenübertragung auf der Basis der anfänglichen Übertragungsbandbreite.

4. "Serving Gateway", S-GW, **dadurch gekennzeichnet, dass**, verbunden mit einer zweiten Netzwerkvorrichtung, wobei die zweite Netzwerkvorrichtung des Weiteren mit mindestens einem weiteren S-GW verbunden ist, das S-GW und das mindestens eine weitere S-GW einen Übertragungskanal gemeinsam nutzen, um Datenübertragung mit der zweiten Netzwerkvorrichtung auszuführen, wobei das S-GW umfasst:
eine Sendeeinheit (1101), die dazu ausgestaltet ist, Verkehrsinformationen in Echtzeit an die zweite Netzwerkvorrichtung zu senden; und
eine Empfangseinheit (1102), die dazu ausgestaltet ist, Informationen über angepasste Übertragungsbandbreite zu empfangen, die durch die zweite Netzwerkvorrichtung gesendet werden, und die Datenübertragung auf der Basis der angepassten Übertragungsbandbreite durchzuführen, wobei die angepasste Übertragungsbandbreite durch Anpassen von Übertragungsbandbreite von mindestens zwei ersten Netzwerkvorrichtungen durch die zweite Netzwerkvorrichtung gemäß den Verkehrsinformationen und einer voreingestellten Anpassungsregel erhalten wird;
wobei das Anpassen der Übertragungsbandbreite der mindestens zwei ersten Netzwerkvorrichtungen gemäß den Verkehrsinformationen und der voreingestellten Anpassungsregel umfasst: Reduzieren der Übertragungsbandbreite von einer ersten Netzwerkvorrichtung der mindestens zwei ersten Netzwerkvorrichtungen, die leicht ausgelastet ist, gemäß den Verkehrsinformationen; und Zuweisen der reduzierten Übertragungsbandbreite zu einer ersten Netzwerkvorrichtung der mindestens zwei ersten Netzwerkvorrichtungen, die überlastet ist, gemäß den Verkehrsinformationen.

5. S-GW nach Anspruch 4, wobei die Empfangseinheit (1102) des Weiteren dazu ausgestaltet ist, eine Abholungsanforderung von Verkehrsinformationen von der zweiten Netzwerkvorrichtung zu empfangen; und
die Sendeeinheit (1101) die Verkehrsinformationen in Echtzeit an die zweite Netzwerkvorrichtung erst dann sendet, nachdem die Empfangseinheit (1102) die Auslastungsabholungsanforderung empfangen hat.

6. S-GW nach Anspruch 5, wobei die Sendeeinheit (1101) des Weiteren dazu ausgestaltet ist, einen Überlastungszustandsbericht an die zweite Netzwerkvorrichtung zu senden, um die zweite Netzwerkvorrichtung zu veranlassen, die Abholungsanforderung von Verkehrsinformationen zu senden.

7. S-SW nach Anspruch 4, wobei die Empfangseinheit (1102) des Weiteren dazu ausgestaltet ist, anfängliche Übertragungsbandbreite zu empfangen, die durch die zweite Netzwerkvorrichtung zugewiesen wird, so dass die S-GW Datenübertragung auf der Basis der anfänglichen Übertragungsbandbreite durchführt.

## Revendications

1. Procédé de gestion de bande passante, **caractérisé en ce qu'**il est applicable à au moins deux premiers dispositifs de réseau et à un second dispositif de réseau, où les deux premiers dispositifs de réseau ou plus partagent un canal de transmission dans le but d'effectuer une transmission de données avec le second dispositif de réseau, le procédé comprenant :
l'envoi, par les premiers dispositifs de réseau, d'informations en temps réel sur le trafic au second dispositif de réseau, et
la réception, par les premiers dispositifs de réseau, d'informations de bande passante de transmission ajustée qui sont envoyées par le second dispositif de réseau, et
l'exécution de la transmission de données sur la base de la bande passante de transmission ajustée, la bande passante de transmission ajustée étant obtenue par le second dispositif de réseau grâce à l'ajustement de la bande passante de transmission des deux premiers dispositifs de réseau ou plus en fonction des informations sur le trafic et d'une règle d'ajustement prédéterminée,
dans lequel l'ajustement de la bande passante de transmission des deux premiers dispositifs de réseau ou plus en fonction des informations sur le trafic et de la règle d'ajustement prédéterminée comprend :
la réduction de la bande passante de transmission depuis un premier dispositif de réseau se trouvant en sous charge parmi les deux premiers dispositifs de réseau ou plus en fonction des informations sur le trafic ; et l'allocation de la bande passante réduite de transmission à un premier dispositif de réseau congestionné parmi les deux premiers dispositifs de réseau ou plus en fonction des informations sur le trafic.

2. Procédé de gestion de bande passante selon la revendication 1, dans lequel l'envoi, par les premiers dispositifs de réseau, d'informations en temps réel sur le trafic au second dispositif de réseau comprend :
l'envoi, par les premiers dispositifs de réseau, des informations en temps réel sur le trafic au second dispositif de réseau lorsque l'état de charge en liaison descendante des premiers dispositifs de réseau est un état congestionné, ou
l'envoi, par les premiers dispositifs de réseau, des informations en temps réel sur le trafic au second dispositif de réseau après que les premiers dispositifs de réseau ont reçu une demande de recueil d'informations sur le trafic provenant du second dispositif de réseau.

3. Procédé de gestion de bande passante selon la revendication 1, dans lequel, avant l'envoi par les premiers dispositifs de réseau des informations de trafic en temps réel au second dispositif de réseau, le procédé comprend en outre :
la réception, par les premiers dispositifs de réseau, d'informations sur la bande passante de transmission initiale envoyées au second dispositif de réseau pendant l'initialisation,
l'exécution, par les premiers dispositifs de réseau, de la transmission de données sur la base de la bande passante de transmission initiale.

4. Passerelle de desserte, S-GW, **caractérisée en ce qu'**elle est reliée à un second dispositif de réseau, le second dispositif de réseau étant en outre relié à une autre passerelle S-GW, la passerelle S-GW et la ou les autres passerelles S-GW partageant un canal de transmission dans le but d'effectuer une transmission de données avec le second dispositif de réseau, la passerelle S-GW comprenant :
une unité d'envoi (1101) configurée pour envoyer des informations en temps réel sur le trafic au second dispositif de réseau, et
une unité de réception (1102) configurée pour recevoir des informations sur une bande passante de transmission ajustée envoyées par le second dispositif de réseau,
ainsi que pour exécuter la transmission de données sur la base de la bande passante de transmission ajustée, la bande passante de transmission ajustée étant obtenue en ajustant la bande passante de transmission d'au moins deux premiers dispositifs de réseau par le second dispositif de réseau en fonction des informations sur le trafic et d'une règle d'ajustement prédéterminée,
dans lequel l'ajustement de la bande passante de transmission des deux premiers dispositifs de réseau ou plus en fonction des informations sur le trafic et de la règle d'ajustement prédéterminée comprend : la réduction de la bande passante de transmission depuis un premier dispositif de réseau se trouvant en sous charge parmi les deux premiers dispositifs de réseau ou plus en fonction des informations sur le trafic ; et l'allocation de la bande passante réduite de transmission à un premier dispositif de réseau congestionné parmi les deux premiers dispositifs de réseau ou plus en fonction des informations sur le trafic.

5. Passerelle S-GW selon la revendication 4, dans laquelle l'unité de réception 1102 est en outre configurée pour recevoir une demande de recueil d'informations sur le trafic en provenance du second dispositif de réseau, et
l'unité d'envoi 1101 n'envoie les informations en temps réel sur le trafic au second dispositif de réseau qu'après que l'unité de réception 1102 a reçu la demande de recueil de charge.

6. Passerelle S-GW selon la revendication 5, dans laquelle l'unité d'envoi 1101 est en outre configurée pour envoyer un rapport d'état de congestion au second dispositif de réseau afin d'amener le second dispositif de réseau à envoyer la demande de recueil d'informations sur le trafic.

7. Passerelle S-GW selon la revendication 4, dans laquelle l'unité de réception 1102 est en outre configurée pour recevoir la bande passante de transmission initiale allouée par le second dispositif de réseau de telle sorte que la passerelle S-GW effectue la transmission de données sur la base de la bande passante initiale de transmission.
